**Europäisches Patentamt**

**European Patent Office**

**Office européen des brevets**

(19)

(11) Numéro de publication: **0 141 721**
**B1**

(12)

# FASCICULE DE BREVET EUROPEEN

(45) Date de publication du fascicule du brevet:
26.07.89

(51) Int. Cl.⁴: **H 04 N 7/13**

(21) Numéro de dépôt: **84402112.1**

(22) Date de dépôt: **19.10.84**

(54) Dispositif de réception dans un système de transmission d'informations vidéos asynchrones.

(30) Priorité: 21.10.83 FR 8316768

(43) Date de publication de la demande:
15.05.85 Bulletin 85/20

(45) Mention de la délivrance du brevet:
26.07.89 Bulletin 89/30

(84) Etats contractants désignés:
DE GB IT NL

(56) Documents cités:
US-A- 3 571 505
US-A- 4 027 100

FUJITSU SCIENT. & TECHN. J., vol. 13, no. 4, décembre
1977, pages 21-52, Kawasaki, JP; O. TAKAHASHI et al.:
"Interframe CODEC for NTSC color television signals"
CONFERENCE ON COMMUNICATIONS EQUIPMENT
AND SYSTEMS, IEEE CONFERENCE, publication no.
209, 20-22 avril 1982, pages 12-16, Birmingham, GB; T.S.
DUFFY et al.: "A CODEC for visual teleconferencing"

(73) Titulaire: SOCIETE ANONYME DE
TELECOMMUNICATIONS, 41, rue Cantagrel,
F-75624 Paris Cedex 13 (FR)

(72) Inventeur: Devimeux, Daniel P., 41, rue Cantagrel,
F-75624 Paris Cedex 13 (FR)
Inventeur: Jolivet, Jean-Claude R., 41, rue Cantagrel,
F-75624 Paris Cedex 13 (FR)

(74) Mandataire: Martinet & Lapoux, 62, rue des Mathurins,
F-75008 Paris (FR)

## Description

La présente invention concerne des techniques de transmission numérique dans laquelle des informations générées sous forme asynchrone, par exemple par un codage à longueur variable et/ou par un codage conditionnel, sont destinées à être transmises par un moyen de transmission numérique synchrone.

De telles techniques s'appliquent en particulier à la transmission d'images de télévision, de visiophone, de vidéoconférence, etc.

La transmission de signaux numériques codés dans une voie numérique ayant un débit prédéterminé, s'effectue habituellement en caractérisant chaque échantillon par un mot comportant un nombre fixe de bits. Cependant, pour des informations nécessitant un débit binaire élevé de transmission telles que des informations d'image, en particulier, il est intéressant de réduire le débit en utilisant un codage à longueur variable dans lequel un mot comporte d'autant moins de bits qu'il est plus probable.

De même, des codeurs à rafraîchissement conditionnel permettent de réduire le débit d'information en ne transmettant que des informations significatives, par exemple par dépassement d'un seuil.

La contribution No. 134 du groupe d'étude XV d'août 1982 du CCITT (International Telegraph and Telephone Consultative Committee) décrit un codeur-décodeur pour transmission de signaux d'images de visioconférence au débit de 2048 kbit/s et préconise un procédé de rafraîchissement conditionnel. Ce procédé consiste essentiellement à ne transmettre que les informations qui ont changé d'une image à l'autre, les informations étant transmises selon un code à longueur variable.

Un système de transmission par codage à longueur variable a déjà été décrit dans le FR-B-2 308 259 au nom de la demanderesse. Les informations générées par un codeur apparaissent à un débit irrégulier et doivent être régulées à l'aide d'une mémoire tampon ou «élastique» pour être transmises dans un réseau numérique synchrone. En réception, les informations reçues à un débit synchrone dans un décodeur doivent être restituées à un rythme identique à celui auquel elles ont été générées. Cette opération est effectuée à l'aide d'une mémoire tampon fonctionnant habituellement symétriquement de celle du codeur.

Un procédé de décodage et de synchronisation classique, comme celui décrit dans le brevet précité, consiste à écrire dans la mémoire tampon de réception les informations telles qu'elles sont reçues et à effectuer la synchronisation et le décodage des informations à la sortie de la mémoire tampon. Toutefois, ce procédé présente de nombreux inconvénients:

Au niveau de la synchronisation en ligne et en trame, le décodage ne permet pas d'effectuer facilement un traitement sur les mots de synchronisation pour éliminer des défauts introduits par des erreurs de transmission, telles que pertes de synchronisation, de ligne ou de mot de synchronisation ou ligne supplémentaire.

De plus, au niveau du décodage à longueur variable, si le nombre maximum de bits par échantillon est égal à 10, la cadence de lecture du signal dans la mémoire tampon étant de 2,5 MHz conformément à la contribution CCITT citée ci-dessus, il est alors nécessaire, soit, de lire la mémoire tampon à une vitesse de 25 Mbit/s, d'utiliser un permutateur asynchrone de mise en œuvre lourde à la cadence de 2,5 MHz.

En outre, au niveau des contenus d'information enregistrés dans les mémoires tampons de transmission et de réception, ceux-ci doivent être exactement symétriques sous peine de perte d'information et de forte dégradation des images restituées.

Un procédé visant à remédier à ces inconvénients est décrit dans l'article de O. TAKAHASHI et al., «Interframe CODEC for NTSC Color Television Signals», FUJITSU SCIENT. & TECHN. J., Vol. 13, N° 4, december 1977, pages 21 à 52. En référence particulièrement aux pages 37 à 39 de cet article, il est prévu dans le dispositif de réception de détecter des mots à longueur fixe de synchronisation de trame reçus afin de récupérer un signal d'horloge et de transcode les mots à longueur variable représentatifs d'information vidéo en des mots à longueur fixe avant d'écrire ceux-ci dans la mémoire tampon de réception. Ceci permet d'éviter une dégradation de la qualité de l'image lorsque la différence de phase entre les informations vidéo entrante et sortante respectivement dans les mémoires de transmission et de réception excède une trame vidéo par exemple. Dans ce cas, la capacité des mémoires tampons sont différentes, celle de la mémoire tampon de transmission étant inférieure à celle de la mémoire tampon de réception. La commande de phase permet de lire l'en-tête de la trame immédiatement précédente dans la mémoire de réception lorsque l'entête de la trame d'image entre dans la mémoire de transmission. La synchronisation de la mémoire de réception est ainsi indépendante du contenu de la mémoire de transmission.

Toutefois, cet article décrit succinctement la synchronisation de la mémoire de réception et ne suggère pas des moyens pour décoder partiellement l'information vidéo reçue avant son écriture dans la mémoire tampon de réception et pour gérer l'écriture et la lecture de cette information vidéo dans la mémoire en fonction de la synchronisation de ligne récupérée avant écriture.

La présente invention vise précisément à fournir de tels moyens dans un dispositif de réception d'information vidéo numérique.

A cette fin, un dispositif de réception dans un système de transmission d'information vidéos asynchrones est tel que défini dans la revendication 1.

Le dispositif de réception selon l'invention peut comporter les moyens énoncés dans la revendication 2.

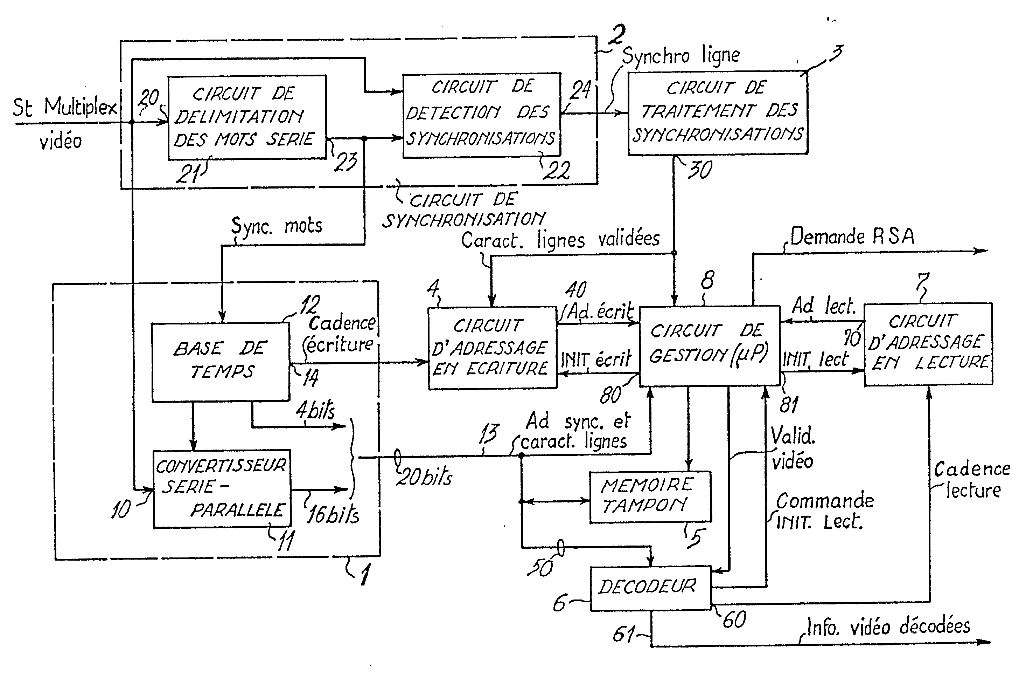

D'autres avantages et caractéristiques apparaîtront plus clairement à la lecture de la description suivante de plusieurs réalisations préférées en référence au dessin annexé dans lequel la figure unique est un bloc-diagramme schématique d'un dispositif de réception d'information dans un système selon l'invention.

Comme précisé dans la contribution No. 134 du CCITT, un signal numérique de vidéoconférence est transmis avec un débit de 2,048 Mbit/s, dans un moyen de transmission entre un dispositif de transmission et un dispositif de réception dans un système d'informations asynchrones. Le signal de vidéoconférence est dans une forme compatible avec la structure de trame définie dans l'avis G.732 du CCITT; en d'autres termes le signal de vidéoconférence est un signal multiplex vidéo, obtenu par multiplexage de 32 canaux à 64 kbit/s. La trame à 2048 Mbit/s comprend deux intervalles de temps IT0 et IT16 assignés au verrouillage de trame MIC et à la signalisation, un intervalle de temps pour un canal son et au moins un intervalle de temps pour un canal de données. Les autres intervalles de temps sont assignés au signal numérique vidéo transmettant des images après avoir subi des codages de rafraîchissement conditionnel, MIC différentiel et à longueur variable dans le dispositif de transmission.

Dans la suite, on s'interesse plus particulièrement à la réception des informations vidéos asynchrones incluses dans le signal multiplex vidéo St obtenu après séparation des canaux de signalisation, de son et de données.

Le signal multiplex vidéo reçu St est composé, conformément à la contribution No. 134 du CCITT, de mots à longueur fixe représentatifs notamment des synchronisations de ligne et trame d'image, des amplitudes MIC (modulation par impulsations codées), la position du premier point d'image de la zone en mouvement dans chaque ligne active et des mots à longueur variable comprenant, par exemple 2 à 10 bits, représentant des points d'image des zones en mouvement codés en code MIC différentiel et transcodés en code à longueur variable.

Le signal St reçu comprenant l'ensemble de ces mots transmis en série est appliqué à une entrée 10 d'un transcodeur 1. Le transcodeur 1 est essentiellement formé d'un convertisseur série-parallèle 11 fournissant en sorte des mots à 16 bits parallèles. Les mots à 16 bits correspondent aux mots d'entrée, après transcodage en mots à longueur fixe. Les mots à 16 bits sont, selon la réalisation illustrée, des caractéristiques du premier point d'image de chaque zone en mouvement représenté par 8 bits indiquant une amplitude correspondante en code MIC et 8 bits indiquant la position du premier point. Des mots à 16 bits peuvent être des mots à codes fixes ayant 4 bits correspondant à deux points successifs de la zone en mouvement, soit 8 bits occupés sur les 16 bits du mot. Des mots à 16 bits peuvent être des caractéristiques relatives à un dernier point de la zone en mouvement de chaque ligne active, appelé point délimiteur de zone codé au moyen de 4 bits, ou une valeur transcodée d'un dernier saut de la zone codée au moyen d'un code fixe à 4 bits. Les mots à 16 bits peuvent encore être des amplitudes en code MIC représentées chacune par 8 bits et relatives à deux points successifs transmis pour rafraîchir l'image. Certains mots à 16 bits peuvent également représenter des caractéristiques de chaque ligne active indiquant le mode de codage, tel que le nombre de niveau de quantification, ou peuvent représenter une position de la synchronisation de la ligne suivante dans le signal numérique. La liste ci-dessus des mots à 16 bits n'est pas limitative et peut être étendue à d'autres informations à condition que les informations d'entrées puissent être représentées par des mots fixes comprenant au maximum 16 bits.

En parallèle avec les mots à longueur fixe de 16 bits, il est nécessaire de disposer de mots de caractérisation supplémentaires indiquant la nature de l'information contenue dans les mots à longueur fixe. Le format des mots supplémentaires est choisi en fonction de la nature des mots à longueur fixe à caractériser. Les mots supplémentaires désignent, en particulier si les mots à 16 bits sont relatives à une amplitude MIC ou MIC différentiel, à une adresse, une synchronisation de ligne, etc. Les mots de caractérisation supplémentaires ont P bits et sont délivrés par le transcodeur 1 en parallèle avec les mots à 16 bits dans un bus 13. Selon une réalisation préférée de l'invention, on se contente d'un nombre P de bits de caractérisation égal à 4. Les mots de caractérisation sont alors les suivants pour chaque ligne active transmise:

DL1: début de la ligne (caractéristiques de la ligne);

DL2: début de ligne suivante à transmettre (adresse de la synchronisation de la ligne suivante);

M8: amplitude MIC et position du premier point d'une zone en mouvement ou d'une partie de zone en mouvement transmise ou valeurs MIC de deux points successifs;

2d: 2 mots en code MIC différentiel à 4 bits chacun;

EOC: fin de zone en mouvement;

EOC1d: 1 mot en code MIC différentiel pour fin de zone en mouvement;

FL: fin de la ligne;

FL1d: fin de la ligne, mot en code MIC différentiel à 4 bits;

CLY: délimination des informations couleurs.

Puis, dans le dispositif de réception, les mots à 16+4 = 20 bits dans le bus 13 sont écrits dans une mémoire tampon 5 à une adresse fournie par un circuit d'adressage en écriture 4 fonctionnant à la cadence d'apparition des mots à 20 bits.

Comme déjà dit, l'invention consiste essentiellement à restituer séquentiellement à la cadence initiale, préalable à la transmission, des informations vidéos reçues en mode asynchrone et à effectuer en réception un transcodage des informations vidéos reçues préalablement à l'inscription de celles-ci dans la mémoire tampon 5 du dispositif de réception. En se référant à la figure, le signal multiplex vidéo St reçu est appliqué à l'entrée 10 du convertisseur 11 dans le transcodeur 1 aussi qu'à une entrée 20 d'un circuit de synchronisation 2. Le circuit 2 initialise et synchronise le transcodeur 1 qui reçoit par l'entrée 10 le signal vidéo codé à longueur variable et qui transforme les mots à longueur variable en mots à longueur fixe.

Le transcodeur 1 est synchronisé par le circuit de synchronisation 2 comprenant essentiellement un circuit de délimination des mots série 21 et un circuit de détection des synchronisations de ligne en trame 22. Les circuits 21 et 22 reçoivent via l'entrée 20 le signal multiplex vidéo St. Une sortie 23 du circuit 21 fournit un signal de synchronisation de mots, d'une part, au circuit de détection des synchronisations 22, d'autre part, à une base de temps 12 incluse dans le codeur 1 afin de synchroniser l'opération de transcodage dans le transcodeur 1.

Une sortie 24 du circuit de détection des synchronisations 22 délivre un signal de synchronisation de ligne qui est composé, pour chaque ligne, d'un mot de synchronisation de ligne dans des bits de poids faible indiquant un numéro de la ligne dans l'image. Le signal de synchronisation de ligne est détecté et traité par un circuit de traitement des synchronisations 3, qui effectue un filtrage sur cinq numéros de ligne consécutifs ce qui permet d'éliminer des fausses synchronisations de ligne, de détecter une perte de synchronisation de ligne et de corriger des synchronisations de ligne erronées. Ceci peut se produire, par exemple, à la suite d'erreurs à travers le moyen de la transmission. Le traitement des synchronisations effectué par le circuit 3 consiste aussi essentiellement à examiner la continuité des numéros de ligne sur cinq lignes consécutives et introduit donc un retard de cinq lignes sur la validation des synchronisations de ligne ainsi qu'il apparaîtra ultérieurement.

Dans la mémoire tampon 5, les informations vidéo proprement dites de chaque ligne sont délimitées par les mots de caractérisation DL1, DL2 et FL, DL1 et FL étant des pointeurs de début et de fin de ligne et DL2 contenant une adresse d'écriture du début de la ligne validée suivante.

A cet effet, comme la validation d'une synchronisation de ligne n'apparaît qu'après un retard de 5 lignes imposé par le circuit 3, le circuit d'adressage en écriture 4 comprend un compteur progressant à la cadence des mots à 20 bits fournie par une sortie 14 de la base de temps 12, et un circuit à retard associé, retardant d'une durée de 5 lignes la cadence d'écriture. Le circuit à retard garde en mémoire la position de l'adresse du compteur du circuit 4 à l'écriture de chacun des mots DL1 successifs et modifie la valeur de l'adresse d'écriture correspondant à un mot DL1 en la remplaçant par l'adresse d'écriture retardée d'une durée de 5 lignes. Ceci permet d'enregistrer dans la mémoire tampon 5 des valeurs de début de ligne DL1 et DL2 dans des cellules de mémoire correspondantes.

La mémoire tampon 5 a une capacité de 64K mots de 20 bits. Des cycles d'adressages alternés en écriture et lecture de la mémoire 5 sont chacun de 400 ns ce qui permet d'obtenir une cadence de lecture de mot à huit bits égale à 2,5 MHz.

Une initialisation de l'adressage de la mémoire tampon 5 et, par suite, la synchronisation de celle-ci sont assurées par un circuit de gestion 8. Le circuit de gestion 8 comporte un microprocesseur qui gère l'ensemble des opérations d'écriture et de lecture selon les trames d'image et le contenu de la mémoire tampon 5.

Le circuit de gestion 8 à microprocesseur gère l'écriture en recevant des signaux de caractérisation de lignes validées par une sortie 30 du circuit 3 ainsi qu'un signal d'adresse écriture fourni par une sortie 40 du circuit 4. Une sortie 80 du circuit 8 fournit au circuit 4 un signal d'initialisation d'adressage en écriture.

De même pour la lecture, le circuit 8 gère le positionnement de l'adressage de lecture en début de chaque ligne par l'intermédiaire d'un circuit d'adressage en lecture 7 ainsi que la validation des trames d'image.

D'une manière analogue à l'écriture, une sortie 70 du circuit d'adressage en lecture 7 fournit un signal d'adresse de lecture au circuit de gestion 8, et une sortie 81 du circuit 8 fournit un signal d'initialisation d'adressage en lecture au circuit 7. La cadence de lecture est fournie par une sortie 60 d'un décodeur 6 qui fait progresser un compteur inclus dans le circuit 7. Le décodeur 6 décode les informations vidéos lues dans la mémoire tampon 5, via un bus 50, en des informations vidéos décodées délivrées par un bus de sortie 61.

La valeur de l'adresse d'écriture de chaque synchronisation trame est enregistrée dans des mémoires vives RAM du circuit de gestion 8. En fonction du nombre de trames en mémoire et du contenu de la mémoire tampon 5, à chaque début de trame, le circuit de gestion 8 restitue l'adresse d'initialisation de lecture au compteur de lecture dans le circuit d'adressage 7 ainsi que la validation ou l'invalidation de chaque tame d'image au décodeur 6. Cette validation ou invalidation de trame correspond, par exemple, à des sous échantillonnages d'une trame sur deux, un arrêt sur image, etc.

Le recalage de la mémoire tampon 5 s'effectue indépendamment du contenu de la mémoire tampon dans le dispositif de transmission (non représenté) contrairement à la technique antérieure. Dans le trame numérique MIC reçue, des informations indiquent le contenu de la mémoire tampon du dispositif de transmission.

L'invention utilise pour recaler les informations vidéos en réception une procédure bien particulière à l'invention, décrite ci-après.

La contribution No. 134 du CCITT indique qu'un codeur dans le dispositif de transmission, s'il reçoit un ordre particulier, doit vider le contenu de la mémoire tampon associée puis rafraîchir toute l'image en bloc suivant un certain mode de codage, cet ordre particulier étant généré par un dispositif externe aux codeurs-décodeurs.

La présente invention utilise cet ordre et génère une commande RSA à partir du circuit de gestion 8 vers le codeur de transmission quant la mémoire tampon 5 menace d'être saturée. Pendant l'attente, l'image est alors «gelée» et ceci pendant un temps ajustable. Si au bout de cette durée l'image attendue n'est pas arrivée, il y a un saut d'image et celle-ci est rafraîchie d'une manière connue.

Si, au contraire, la mémoire tampon 5 risque d'être complètement vide, le circuit de gestion 8 commande un arrêt sur l'image en lecture et attend qu'il y ait au moins une image complète dans la mémoire 5 pour arrêter le gel de l'image.

Cette organisation de gestion de la mémoire 5 grâce au circuit de gestion 8 a pour effet, d'une part, de s'affranchir de l'exploitation de l'information sur le contenu de la mémoire tampon de transmission et des inconvénients associés tels que risques d'erreurs apportant des dégradations en cas d'erreus de transmission sur la valeur du contenu, d'autre part, d'assurer le fonctionnement du système sans introduire de défauts gênants dus aux divergences entre les contenus des mémoires tampons de transmission et de réception.

Le circuit de gestion 8 extrait au début de la lecture de chaque ligne, l'adresse de la synchronisation de la ligne validée suivante dans le bus d'entrée-sortie 13–50 de la mémoire tampon 5. Cette adresse est ensuite utilisée pour initialiser à chaque début de ligne de compteur de lecture du circuit d'adressage 7 qui avance alors au rythme du décodeur 6.

Le décodeur 6, piloté par une base de temps ligne et image, décode séquentiellement le mot de caractérisation à 4 bits et, en fonction de la signification de ce mot, délivre le signal de cadence de lecture au circuit 7 pour adresser en lecture la mémoire tampon 5.

Les mots à 16 bits sortant de la mémoire 5 sont également décodés par le décodeur 6 et les zones en mouvement sont restituées sous leur forme initiale telles qu'elles avaient été détectées.

On constate donc qu'avec le dispositif de réception de l'invention, les opérations de synchronisation en ligne et en trame sont effectuées avant l'inscription dans la mémoire tampon 5; la fréquence maximum de traitement est alors de 2,048 MHz. Le prétraitement effectué grâce aux circuits 3 et 4 sur les synchronisations de ligne permet de ne prendre en compte dans cette mémoire tampon 5, en lecture, que des lignes dont les synchronisations ont été validées.

On constate également que l'invention permet d'utiliser une mémoire tampon de réception 5 dont le contenu n'est pas identique à celui de la mémoire tampon de transmission, bien que le temps de transfert de l'information entre l'entrée de la mémoire tampon de transmission et la sortie de la mémoire tampon de réception 5 soit constant.

Il serait également possible de choisir des mots d'information à longueur fixe, lesdits mots comportant un nombre n d'éléments binaires, n étant un entier naturel approprié à l'application choisie. De la même façon, les mots de caractérisation seraient de longueur fixe et formés de P bits, P étant également un entier naturel et $2^P$ indiquant alors le nombre de configurations des mots à n bits.

## Revendications

1. Dispositif de réception dans un système de transmission d'informations vidéos asynchrones pour recevoir un signal numérique multiplex vidéo (St) incluant des mots à longueur fixe représentatifs de synchronisations de ligne et trame d'image et des mots à longueur variable représentatifs d'information vidéo, ledit dispositif comprenant des moyens (2, 3) pour détecter les mots à longueur fixe de synchronisation de ligne et de trame, des moyens (1) pour transcoder lesdits mots à longueur variable en des mots à longueur fixe d'information vidéo (16 bits), et une mémoire tampon (5) commandée par des moyens de gestion d'adresse d'écriture et de lecture (4, 8, 7) pour mémoriser les mots à longueur fixe d'information vidéo, caractérisé en ce que lesdits moyens pour transcoder (1) sont commandés par les moyens pour détecter (2, 3) pour fournir en parallèle avec lesdis mots à longueur fixe d'information vidéo (16), des mots de longueur fixe d'information supplémentaire (4 bits) comprenant, en outre, des mots de début de ligne (DL1) et des mots de fin de ligne (FL) caractérisant lesdits mots d'information vidéo, et en ce que lesdits moyens de gestion (4, 8, 7) sont reliés aux moyens pour détecter (2, 3) pour établir des adresses d'écriture et de lecture de ladite mémoire tampon (5) en fonction des mots de début et fin de ligne (DL1, FL).

2. Dispositif selon la revendication 1, caractérisé en ce que lesdits moyens de gestion (4, 8, 7) incluent des moyens (4) reliés aux moyens pour transcoder (1) et commandés par les moyens pour détecter (2, 3) pour écrire dans la mémoire tampon des mots caractérisant une ligne et une adresse de synchronisation validée de la ligne suivante en réponse à chaque mot de début de ligne (DL1).

3. Dispositif selon la revendication 2, caractérisé en ce que chacun desdits mots à longueur fixe d'information vidéo en combinaison avec l'un respectif desdits mots caractérisant a n bits, n étant un entier.

4. Dispositif selon la revendication 3, caractérisé en ce que le nombre n est égal à 20.

5. Dispositif selon la revendication 3 ou 4, caractérisé en ce que chaque mot caractérisant a P bits, $2^P$ étant un nombre de configurations de mots à longueur fixe à n bits, P étant un entier.

6. Dispositif selon la revendication 5, caractérisé en ce que l'entier P est égal à 4.

7. Dispositif selon l'une quelconque des revendications 2 à 6, caractérisé en ce que lesdits moyens de gestion (4, 8, 7) extraient, en début de chaque ligne en lecture, l'adresse de synchronisation validée de la ligne suivante à partir d'un bus d'entrée-sortie (13, 50) de ladite mémoire tampon (5).

8. Dispositif selon l'une quelconque des revendications 2 à 7, caractérisé en ce que les moyens pour détecter (2, 3) comprennent des moyens (3) pour traiter lesdits mots de synchronisation de ligne détectés avant que l'information correspondante soit écrite dans la mémoire tampon (5), de manière à lire les mots d'information vidéo correspondant à des mots de synchronisation de ligne validés.

9. Dispositif selon l'une quelconque des revendications 2 à 8, caractérisé en ce qu'il comprend un décodeur (6) pour extraire les mots d'information vidéo de la seconde mémoire tampon (5) et, en fonction de la signification desdits mots supplémentaires caractérisants, pour générer une commande de lecture vers des moyens (7) pour adresser en lecture ladite mémoire tampon (5).

10. Dispositif selon l'une quelconque des revendications 2 à 9, caractérisé en ce que les moyens pour gérer (4, 8, 7) permettent un recalage de ladite mémoire tampon (5) en cas de saturation, d'une part, par un gel d'image, d'autre part, en générant un signal de demande de rafraîchissement accélérée (RSA) vers un dispositif de transmission dudit système.

**Claims**

1. Receiving device in an asynchronous video information transmitting system for receiving a digital multiplex video signal (St) including fixed-length words representative of picture line and field synchronizations and variable-length words representative of video information, said device comprising means (2, 3) for detecting the line and field synchronization fixed-length words, means (1) for transcoding said variable-length words into video information fixed-length words (16 bits), and a buffer memory (5) controlled address writing and reading monitoring by means (4, 8, 7) for memorizing the video information fixed-length words, characterized in that said transcoding means (1) are controlled by the detecting means (2, 3) thereby supplying, in parallel with said video information fixed-length words (16 bits), additional information fixed-length words (4 bits) further comprising line start words (DL1) and line end words (FL) characterizing said video information words, and in that said monitoring means (4, 8, 7) are connected to the detecting means (2, 3) thereby deriving writing and reading addresses of said buffer memory (5) as a function of the line start and end words (DL1, FL).

2. Device according to claim 1, characterized in that said monitoring means (4, 8, 7) include means (4) connected to the transcoding means (1) and controlled by the detecting means (2, 3) for writing into the buffer memory, line words characterizing a line, and an enabled synchronization address of the following line responsive to each line start word (DL1).

3. Device according to claim 2, characterized in that each of said video information fixed-length word in combination with respective one of said characterizing words has n bits, n being an integer.

4. Device according to claim 3, characterized in that the number n is equal to 20.

5. Device according to claim 3 or 4, characterized in that each characterizing word has P bits, $2^P$ being a number of configurations of n-bit fixed-length words, P being an integer.

6. Device according to claim 5, characterized in that the integer P is equal to 4.

7. Device according to any one of claims 2 to 6, characterized in that said monitoring means (4, 8, 7) extract, when reading of the start of each line, the enabled synchronization address of the following line from an input-output bus (13, 50) of said buffer memory (5).

8. Device according to any one of claims 2 to 7, characterized in that the detecting means (2, 3) comprise means (3) for processing said detected line synchronization words prior to corresponding information being written into the buffer memory (5), thereby reading the video information words corresponding to enabled line synchronization words.

9. Device according to any one of claims 2 to 8, characterized in that it comprises a decoder (6) for extracting the video information words from the buffer memory (5) and, depending on the significance of said characterizing additional words, for generating a reading control to means for reading addressing said buffer memory (5).

10. Device according to any one of claims 2 to 9, characterized in that the monitoring means (4, 8, 7) enable a re-alignment of said buffer memory (5) in the event of saturation firstly by a picture freeze and secondly by deriving an accelerated replenishment requesting signal (RSA) to a transmitting device in said system.

**Patentansprüche**

1. Empfangsvorrichtung in einem asynchronen Video-Übertragungssystem zum Empfang eines digitalen Multiplex-Videosignals (St), welches Synchronisationen der Bildzeile und des Bildrahmens repräsentierende Wörter fester Länge sowie Videoinformation repräsentierende Wörter variabler Länge enthält, mit Mitteln (2, 3) zur Erfassung von Zeilen- und Rahmen-Synchronisationswörtern fester Länge, mit Mitteln (1) zum Umkodieren der Wörter variabler Länge in Videoinformationswörter fester Länge (16 Bits), sowie mit einem Pufferspeicher (5), welcher von Schreibadressen- und Leseadressen-Steuermitteln (4, 8, 7) zum Speichern der Videoinformationswörter fester Länge gesteuert ist, dadurch gekennzeichnet, dass die Mittel (1) zur Umkodierung von den Mitteln (2, 3) zur Erfassung gesteuert sind, um mit den Videoinformationswörtern fester Länge (16 Bits) parallel ergänzende Information repräsentierende Wörter fester Länge (4 Bits) zu liefern, welche unter anderem den Anfang der Zeile (DL1) repräsentierende Wörter und das Ende der Zeile (FL) repräsentierende Wörter enthalten, die die Videoinformationswörter charakterisieren, und daß die Steuermittel (4, 8, 7) mit den Mitteln (2, 3) zur Erfassung zur Erstellung von Schreib- und Leseadressen des Pufferspeichers (5) in Abhängigkeit der den Zeilenanfang und das Zeilenende repräsentierenden Wörter (DL1, FL) verbunden sind.

2. Vorrichtung nach Anspruch 1, dadurch gekennzeichnet, daß die Steuermittel (4, 8, 7) weiterhin Mittel (4) umfassen, die mit den Mitteln zur Umkodierung (1) verbunden sind und von den Mitteln (2, 3) zur Erfassung gesteuert sind, um in den Pufferspeicher Wörter einzuschreiben, die eine Zeile und eine Adresse der gültig gemachten Synchronisation der folgenden Zeile auf jedes Zeilenanfangs-Wort (DL1) hin charakterisieren.

3. Vorrichtung nach Anspruch 2, dadurch gekennzeichnet, daß jedes der Videoinformationswörter fester Länge in Kombination mit jeweils einem der charakterisierenden Wörter n Bits aufweist, wobei n ganzzahlig ist.

4. Vorrichtung nach Anspruch 3, dadurch gekennzeichnet, daß n = 20 ist.

5. Vorrichtung nach Anspruch 3 oder 4, dadurch gekennzeichnet, daß jedes charakterisierende Wort P Bits aufweist, wobei $2^P$ die Anzahl der Konfigurationen der Wörter mit fester, n Bits umfassender Länge und P eine ganze Zahl sind.

6. Vorrichtung nach Anspruch 5, dadurch gekennzeichnet, daß P = 4 ist.

7. Vorrichtung nach einem der Ansprüche 2 bis 6, dadurch gekennzeichnet, daß die Steuermittel (4, 8, 7) zu Beginn jeder zu lesenden Zeile die gültig gemachte Synchronisationsadresse der folgenden Zeile aus von einem Eingabe/Ausgabe-Bus (13, 50) des Pufferspeichers (5) extrahiert.

8. Vorrichtung nach einem der Ansprüche 2 bis 7, dadurch gekennzeichnet, daß die Mittel (2, 3) zur Erfassung Mittel (3) zur Bearbeitung der erfaßten Linien-Synchronisationswörter vor dem Einschreiben der entsprechenden Information in den Pufferspeicher (5) derart umfassen, daß die Wörter der entsprechenden Videoinformation mit den gültigen Zeilensynchronisationswörtern mitgelesen werden.

9. Vorrichtung nach einem der Ansprüche 2 bis 8, gekennzeichnet durch einen Dekodierer (6) zum Extrahieren von Videoinformationswörtern aus dem zweiten Pufferspeicher (5) sowie zum Erzeugen, in Abhängigkeit von der Signifikanz der charakterisierenden Ergänzungswörter, eines Lesebefehls für die Mittel (7) zur Leseadressierung des Pufferspeichers (5).

10. Vorrichtung nach einem der Ansprüche 2 bis 9, dadurch gekennzeichnet, daß die Steuermittel (4, 8, 7) eine Neueinstellung des Pufferspeichers (5) bei Sättigung einerseits durch ein eingefrorenes Bild ermöglichen und andererseits ein beschleunigter Wiederauffrischbefehl an eine Sendevorrichtung des Systems gesandt wird.

St Multiplex vidéo — 20

CIRCUIT DE DELIMITATION DES MOTS SERIE — 21 — 23

CIRCUIT DE DETECTION DES SYNCHRONISATIONS — 22

2 — Synchro ligne

CIRCUIT DE TRAITEMENT DES SYNCHRONISATIONS — 3 — 30 — 24

CIRCUIT DE SYNCHRONISATION

Sync. mots

Caract. lignes validées

Demande R S A

BASE DE TEMPS — 12 — Cadence écriture — 14

CIRCUIT D'ADRESSAGE EN ECRITURE — 4 — 40 Ad. écrit — INIT écrit — 80

CIRCUIT DE GESTION (µP) — 8

Ad lect. — 70 — INIT lect. — 81

CIRCUIT D'ADRESSAGE EN LECTURE — 7

4 bits

CONVERTISSEUR SERIE - PARALLELE — 10 — 11 — 16 bits

20 bits

Ad sync. et caract. lignes — 13

MEMOIRE TAMPON — 5

Valid. vidéo

Commande INIT. Lect.

Cadence lecture

DECODEUR — 6 — 50 — 60 — 61

Info. vidéo décodées

1

EP 0 141 721 B1